(19) Europäisches Patentamt
European Patent Office
Office européen des brevets

(11) **EP 4 778 985 A1**

(12) **EUROPEAN PATENT APPLICATION**
published in accordance with Art. 153(4) EPC

(43) Date of publication:
22.07.2026 Bulletin 2026/30

(21) Application number: 24865488.1

(22) Date of filing: 11.09.2024

(51) International Patent Classification (IPC):
C09J 4/06 (2006.01)    C09J 4/02 (2006.01)
C09J 11/06 (2006.01)    C09J 133/04 (2006.01)
H02K 15/02 (2025.01)

(52) Cooperative Patent Classification (CPC):
C09J 4/00; C09J 4/06; C09J 11/06; C09J 133/04;
H02K 15/02

(86) International application number:
PCT/JP2024/032594

(87) International publication number:
WO 2025/057988 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.09.2023  JP 2023148023

(71) Applicant: Okura Industrial Co., Ltd.
Marugame-shi, Kagawa 763-8508 (JP)

(72) Inventors:
• GOTO Keisuke
Marugame-shi, Kagawa 763-8508 (JP)
• NISHI Hideki
Marugame-shi, Kagawa 763-8508 (JP)
• KOBAYASHI Ryohei
Marugame-shi, Kagawa 763-8508 (JP)

(74) Representative: Becker, Eberhard
Becker Kurig & Partner
Patentanwälte mbB
Bavariastraße 7
80336 München (DE)

(54) **ANAEROBIC ADHESIVE COMPOSITION**

(57) [Problem] To provide an anaerobic adhesive composition having excellent peel strength, more particularly excellent cohesive failure resistance. [Solution] The anaerobic adhesive composition is characterized by having 100 parts by weight of a polymerizable (meth) acrylic monomer (A) containing (a-1) a hydroxyalkyl (meth) acrylate and (a-2) a (meth) acrylic acid as main components, 0.01-15 parts by weight of an organic peroxide (B), 0.01-10 parts by weight of a curing accelerator (C), and 0.1-30 parts by weight of a polyalkyl (meth) acrylate (D).

FIG. 1

EP 4 778 985 A1

**Description**

Technical Field

The present invention relates to an anaerobic adhesive composition.

Related Art

As a representative reaction-curing acrylic adhesive, a disclosed anaerobic adhesive enters a gap between metal adherends and cures upon blocking of air. Such an anaerobic adhesive is primarily known for preventing loosening of screws and for fixing bearings to shafts. In addition, in recent years, such an anaerobic adhesive has also been used as an adhesive for a laminated iron core used in a stator or a rotor of a rotating electric machine.

As described in Patent Document 1, a laminated iron core used in a stator or a rotor of a rotating electric machine is laminated by bonding multiple iron core sheets with an adhesive in a die. As iron core sheets are successively laminated in the die, the laminated iron core is discharged downward from the die, and final curing of the adhesive is achieved by heating as necessary. When the laminated iron core is discharged downward from the die, it is required that the laminated iron core sheets do not come apart (do not separate).

Related Art Documents

Patent Documents

Patent Document 1: WO18/047209

SUMMARY OF INVENTION

Technical Problem

In such a background, an adhesive for a laminated iron core is required to have a strength (hereinafter, peel strength) that prevents peeling even when multiple iron core sheets are bonded, and an objective of the present invention is to provide an anaerobic adhesive composition having excellent peel strength, and more specifically, excellent cohesive failure resistance.

Solution to Problem

That is, according to the present invention, the following means for solving the above problem are provided.

(1) An anaerobic adhesive composition includes: 100 parts by weight of a polymerizable (meth)acrylic monomer (A) containing, as main components, (a-1) hydroxyalkyl (meth)acrylate and (a-2) (meth)acrylic acid; 0.01 to 15 parts by weight of an organic peroxide (B); 0.01 to 10 parts by weight of a curing accelerator (C); and 0.1 to 30 parts by weight of a polyalkyl (meth)acrylate (D).
(2) In the anaerobic adhesive composition according to (1), the polymerizable (meth)acrylic monomer (A) contains: 35 to 90 weight% of the (a-1); 5 to 60 weight% of the (a-2); and 0 to 35 weight% of (a-3) (meth)acrylic acid ester other than the (a-1) and the (a-2).
(3) In the anaerobic adhesive composition according to (1), the polyalkyl (meth)acrylate (D) is a methyl acrylate polymer and/or a methyl methacrylate polymer.
(4) In the anaerobic adhesive composition according to (1), the polyalkyl (meth)acrylate (D) has a weight average molecular weight Mw of 10,000 or more and 350,000 or less.
(5) In the anaerobic adhesive composition according to any one of (1) to (4), the polyalkyl (meth)acrylate (D) is soluble in the polymerizable (meth)acrylic monomer (A).
(6) In the anaerobic adhesive composition according to any one of (1) to (4), after curing, the anaerobic adhesive composition forms a sea-island structure in which the polyalkyl (meth)acrylate (D) forms a dispersed phase in a continuous phase composed of the polymerizable (meth)acrylic monomer (A).
(7) In the anaerobic adhesive composition according to (6), the dispersed phase has a substantially columnar shape or a substantially disk shape.
(8) The anaerobic adhesive composition according to any one of (1) to (4) is used for a laminated iron core.

Effects of Invention

According to the present invention, it is possible to provide an anaerobic adhesive composition having excellent peel strength with an adherend, and more specifically, excellent cohesive failure resistance.

BRIEF DESCRIPTION OF THE DRAWINGS

[FIG. 1] is a schematic cross-sectional view for describing in detail a mechanism in the case where a dispersed phase composed of a polyalkyl (meth)acrylate (D) aggregates into a substantially columnar shape.
[FIG. 2] is SEM images of a cured product of an anaerobic adhesive composition according to the present invention. FIG. 2(a) is an image taken at 1,500 magnification, and FIG. 2(b) is an image taken at 10,000 magnification.
[FIG. 3] is schematic cross-sectional views for describing in detail a mechanism in the case where the dispersed phase composed of the polyalkyl (meth)acrylate (D) aggregates into a substantially disk shape. FIG. 3(a) is a schematic cross-sectional view in the case where the cured product of the anaerobic adhesive composition has a substantially disk-shaped dispersed phase, and FIG. 3(b) is a schematic cross-sectional view in the case where the cured product of the anaerobic adhesive composition does not have a dispersed phase.
[FIG. 4] is views for describing a measurement method of peel strength in the present invention. FIG. 4(a) to (b) are schematic plan views of test pieces, FIG. 4(c) is a schematic perspective plan view of first and second test pieces overlapped with each other, and FIG. 4(d) is a schematic cross-sectional view showing an example of a measurement apparatus for peel strength.
[FIG. 5] is a view showing SEM images of fracture interfaces after a peel test taken at 1,500 magnification and showing fracture states, in Example of the present invention.
[FIG. 6] is a view showing a result of chemical mapping at a wavelength of 814 cm$^{-1}$ using a Raman spectroscopic measurement apparatus on a cross-section of the cured anaerobic adhesive composition in Example of the present invention.

DESCRIPTION OF THE EMBODIMENTS

In the present specification, "(meth)acrylic" or "(meth)acrylate" is a generic term for "acrylic" and "methacrylic", or a generic term for "acrylate" and "methacrylate", and refers to one or both of these.
In addition, in the present specification, "A to B" refers to a range including the numerical values at both ends thereof (meaning "equal to or greater than" and "equal to or less than").
Furthermore, in the present invention, "cured (after curing)" refers to a state in which the reaction rate is 50% or more when measured according to a Fourier transform infrared spectroscopy (FT-IR) method. Specifically, for example, measurement may be performed using a Fourier transform infrared spectroscopy apparatus such as Nicolet iS5 (manufactured by Thermo Fisher Scientific Inc.). In addition, the measurement method may be performed, for example, according to the following method.

(1) The peak intensity Ia at 810 cm$^{-1}$ of the anaerobic adhesive composition before reaction is measured by FT-IR.
(2) The peak intensity Ib at 810 cm$^{-1}$ of the anaerobic adhesive composition after reaction is measured by FT-IR.
(3) The reaction rate of the anaerobic adhesive composition after reaction is calculated according to the following (Formula), and in the case of 50% or more, it is determined as a "cured" state.

Reaction rate (%) of anaerobic adhesive composition after reaction = {1 - (Ib/Ia)} $\times$ 100         (Formula)

[Polymerizable (Meth)acrylic Monomer (A)]

The polymerizable (meth)acrylic monomer (A) contains two components, i.e., (a-1) hydroxyalkyl (meth)acrylate and (a-2) (meth)acrylic acid, as main components.
In the present specification, "main component" refers to a component that accounts for 50 weight% or more of the polymerizable (meth)acrylic monomer (A), which means that the two components of (a-1) hydroxyalkyl (meth)acrylate and (a-2) (meth)acrylic acid combined account for 50 weight% or more.
The polymerizable (meth)acrylic monomer (A) may contain 35 to 90 weight% of (a-1) hydroxyalkyl (meth) acrylate, 5 to 60 weight% of (a-2) (meth)acrylic acid, and 0 to 35 weight% of (a-3) (meth)acrylic acid ester other than (a-1) and (a-2), and may further contain other polymerizable polymers.

(a-1) Hydroxyalkyl (meth)acrylate

(a-1) Hydroxyalkyl (meth)acrylate has a hydroxyl group in the molecule, and therefore has a characteristic of excellent adhesion to an adherend. Examples of hydroxyalkyl (meth)acrylate include 2-hydroxyethyl (meth)acrylate, 2-hydroxypropyl (meth)acrylate, 3-hydroxypropyl (meth)acrylate, 4-hydroxybutyl (meth)acrylate, diethylene glycol mono(meth)acrylate, polypropylene glycol (meth)acrylate, etc.

Among these, from the viewpoint of heat resistance, 2-hydroxyethyl methacrylate or 2-hydroxypropyl methacrylate having a high glass transition point (Tg) is preferably used. These may be used alone or as a combination of two or more types.

(a-1) Hydroxyalkyl (meth)acrylate is preferably contained in 35 to 90 weight% of 100 parts by weight of the polymerizable (meth)acrylic monomer (A). From the viewpoint of adhesion, the lower limit value is preferably 40 weight% or more, 45 weight% or more, or 50 weight% or more, and from the viewpoint of heat resistance, the upper limit value is preferably 85 weight% or less, 80 weight% or less, or 75 weight% or less.

(a-2) (Meth)acrylic acid

(a-2) (Meth)acrylic acid is preferably contained in 5 to 60 weight% of 100 parts by weight of the polymerizable (meth)acrylic monomer (A). From the viewpoint of further enhancing heat resistance and curing rate, the lower limit value is preferably 10 weight% or more, 15 weight% or more, 20 weight% or more, or 25 weight% or more, and from the viewpoint of skin irritation and metal corrosiveness, the upper limit value is preferably 60 weight% or less, 50 weight% or less, 40 weight% or less, or 30 weight% or less.

(a-3) (Meth)acrylic acid ester other than (a-1) and (a-2)

(a-3) (Meth)acrylic acid ester other than (a-1) and (a-2) is not particularly limited as long as it is an ester formed from acrylic acid and alcohol (or phenol), and examples thereof include di(meth)acrylate of alkylene oxide adduct of bisphenol A such as ethoxylated bisphenol A dimethacrylate, isobornyl (meth)acrylate, alkyl (meth)acrylate, phenoxyethyl (meth)acrylate, cyclohexyl (meth)acrylate, tetrahydrofurfuryl (meth)acrylate, poly(meth)acrylate of polyhydric alcohol, epoxy (meth)acrylate obtained by addition reaction of (meth)acrylic acid with epoxy resin, urethane poly(meth)acrylate, and polyester poly(meth)acrylate.

Furthermore, examples of (meth)acrylic acid ester other than (a-1) and (a-2) include acidic phosphate ester containing (meth)acryloyloxy group. Examples of such ester include mono(meth)acryloyloxyethyl phosphate such as mono(2-hydroxyethyl methacrylate) phosphate, di(meth)acryloyloxyethyl phosphate, mono(meth)acryloyloxypropyl phosphate, di(meth)acryloyloxypropyl phosphate, mono(meth)acryloyloxy-$\beta$-chloropropyl phosphate, and di(meth)acryloyloxy-$\beta$-chloropropyl phosphate.

In addition, the following may be used as (meth)acrylic acid ester other than (a-1) and (a-2): methyl (meth) acrylate, ethyl (meth)acrylate, propyl (meth)acrylate, butyl (meth)acrylate, 2-ethylhexyl (meth)acrylate, isooctyl (meth) acrylate, isodecyl (meth)acrylate, lauryl (meth)acrylate, stearyl (meth)acrylate, phenyl (meth)acrylate, tetrahydrofurfuryl (meth)acrylate, 2-hydroxy-3-phenoxypropyl (meth)acrylate, glycidyl (meth)acrylate, caprolactone-modified tetrahydrofurfuryl (meth)acrylate, 3-chloro-2-hydroxypropyl (meth)acrylate, N,N-dimethylaminoethyl (meth)acrylate, N,N-diethylaminoethyl (meth)acrylate, t-butylaminoethyl (meth)acrylate, ethoxycarbonylmethyl (meth)acrylate, phenol ethylene oxide-modified (meth)acrylate, phenol (2 mol ethylene oxide-modified) (meth)acrylate, phenol (4 mol ethylene oxide-modified) (meth)acrylate, paracumylphenol ethylene oxide-modified (meth)acrylate, nonylphenol ethylene oxide-modified (meth)acrylate, nonylphenol (4 mol ethylene oxide-modified) (meth)acrylate, nonylphenol (8 mol ethylene oxide-modified) (meth)acrylate, nonylphenol (2.5 mol propylene oxide-modified) (meth)acrylate, 2-ethylhexyl carbitol (meth) acrylate, trifluoroethyl (meth)acrylate, $\beta$-(meth)acryloyloxyethyl hydrogen succinate, $\omega$-carboxy-polycaprolactone mono(meth)acrylate, N-(meth)acryloyloxyalkyl hexahydrophthalimide, maleic acid, fumaric acid, $\omega$-carboxy-polycapro-lactone mono(meth)acrylate, phthalic acid monohydroxyethyl (meth)acrylate, (meth)acrylic acid dimer, $\beta$-(meth)acryloy-loxyethyl hydrogen succinate, 2-acryloyloxyethyl succinic acid, 2-methacryloyloxyethyl succinic acid, cyclohexyl (meth) acrylate, dicyclopentanyl (meth)acrylate, dicyclopentenyl (meth)acrylate, dicyclopentenyloxyethyl (meth)acrylate, methoxylated cyclodecatriene (meth)acrylate, 1,2-polybutadiene terminal urethane (meth)acrylate, 1,4-polybutadiene terminal urethane (meth)acrylate, polyisoprene terminal (meth)acrylate, polyester-based urethane (meth)acrylate, polyether-based urethane (meth)acrylate, polyester (meth)acrylate, bis A type epoxy (meth)acrylate, 1,3-butylene glycol di(meth) acrylate, 1,4-butanediol di(meth)acrylate, 1,6-hexanediol di(meth)acrylate, 1,9-nonanediol di(meth)acrylate, neopentyl glycol di(meth)acrylate, dicyclopentanyl di(meth)acrylate, 2-ethyl-2-butyl-propanediol (meth)acrylate, neopentyl glycol-modified trimethylolpropane di(meth)acrylate, stearic acid-modified pentaerythritol diacrylate, polyethylene glycol-modified bisphenol A di(meth)acrylate, polypropylene glycol-modified bisphenol A di(meth)acrylate, polypropylene glycol di(meth)acrylate, 2,2-bis(4-(meth)acryloxydiethoxyphenyl)propane, 2,2-bis(4-(meth)acryloxypropoxyphenyl)propane, 2,2-bis(4-(meth)acryloxytetraethoxyphenyl)propane, trimethylolpropane tri(meth)acrylate, tris[(meth)acryloyloxyethyl] isocyanurate, dimethylolpropane tetra(meth)acrylate, pentaerythritol tetra(meth)acrylate, pentaerythritol ethoxy tetra(meth)acrylate, dipentaerythritol penta(meth)acrylate, dipentaerythritol hexa(meth)acrylate, etc. These may be used alone or as a combination of two or more types.

(a-3) (Meth)acrylic acid ester other than (a-1) and (a-2) is preferably contained in 0 to 35 weight% of 100 parts by weight of the polymerizable (meth)acrylic monomer (A). The lower limit value is preferably 0.01 weight% or more, or 0.1 weight% or more, and from the viewpoint of improving peel strength, and more specifically, cohesive failure resistance, the upper limit value is preferably 30 weight% or less, 25 weight% or less, 20 weight% or less, 15 weight% or less, 10 weight% or less, 5 weight% or less, or 3 weight% or less.

By blending (a-3) (meth)acrylic acid ester other than (a-1) and (a-2) in the above ratio and taking (a-1) hydroxyalkyl (meth)acrylate and (a-2) (meth)acrylic acid as main components, an anaerobic adhesive composition having excellent peel strength, and more specifically, excellent cohesive failure resistance, can be obtained.

[Organic Peroxide (B)]

The organic peroxide (B) functions as an initiator for radical polymerization of the (meth)acrylic monomer, and those illustrated below may be used alone or as a combination of two or more types.

Examples of the organic peroxide (B) include ketone peroxides, dialkyl peroxides, diacyl peroxides, peroxy esters, and hydroperoxides, and among these, hydroperoxides are preferable from the viewpoint of curability and storage stability of the anaerobic adhesive composition.

Examples of hydroperoxides include cumene hydroperoxide, p-menthane hydroperoxide, tertiary butyl hydroperoxide, and 1,1,3,3-tetramethylbutyl hydroperoxide.

The content of the organic peroxide (B) in the anaerobic adhesive composition contains 0.01 to 15 parts by weight with respect to 100 parts by weight of the polymerizable (meth)acrylic monomer from the viewpoint of curability. The lower limit value is preferably 0.05 parts by weight or more, 0.1 parts by weight or more, 1 part by weight or more, or 3 parts by weight or more from the viewpoint of further enhancing the curing rate, and the upper limit value is preferably 10 parts by weight or less, 9 parts by weight or less, 8 parts by weight or less, or 7 parts by weight or less from the viewpoint of further enhancing storage stability and peel strength of the anaerobic adhesive composition.

[Curing Accelerator (C)]

The curing accelerator (C) is a component that promotes curing of the anaerobic adhesive composition, such as shortening the curing time of the anaerobic adhesive composition, promoting the curing reaction, or improving adhesion by modifying the adhesive surface, and those illustrated below may be used alone or as a combination of two or more types.

Examples of the curing accelerator (C) include hydrazine-based compounds such as 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbazate, p-nitrophenylhydrazine, and p-tolylsulfonylhydrazide; hydroquinone-based compounds such as methylhydroquinone, dimethylhydroquinone, methoxyhydroquinone, 2-t-butylhydroquinone, and 2,5-di-t-butylhydroquinone; tertiary amines such as N,N-dimethyl-o-toluidine, N,N-dimethyl-m-toluidine, N,N-dimethyl-p-toluidine, N,N-dimethylaniline, and N,N-dimethylnaphthylamine; heterocyclic amines such as quinoline, quinaldine, quinoxaline, tetrahydroquinoline, and tetrahydroquinaldine; benzoquinone; and saccharin.

In benzoquinone, the positional relationship of the two oxygen atoms in the six-membered carbon atom ring may be ortho, meta, or para. In addition, the positional relationship (para) of the two hydroxyl groups in the hydroquinone-based compound and the positional relationship of the two oxygen atoms in benzoquinone may be the same or different.

The content of the curing accelerator (C) in the anaerobic adhesive composition is preferably 0.01 parts by weight or more, 0.05 parts by weight or more, 0.1 parts by weight or more, or 0.2 parts by weight or more with respect to 100 parts by weight of the polymerizable (meth)acrylic monomer (A), from the viewpoint of further enhancing the curing rate of the anaerobic adhesive composition. In addition, from the viewpoint of further enhancing storage stability of the anaerobic adhesive composition, the content is more preferably 10 parts by weight or less, 5 parts by weight or less, 3 parts by weight or less, 2 parts by weight or less, or 1 part by weight or less.

[Polyalkyl (Meth)acrylate (D)]

The polyalkyl (meth)acrylate (D) is soluble in the polymerizable (meth)acrylic monomer (A), and is a component for forming a dispersed phase in the continuous phase composed of the polymerizable (meth)acrylic monomer (A) when the anaerobic adhesive composition is cured, to improve peel strength, and more specifically, cohesive failure resistance.

The polyalkyl (meth)acrylate (D) is a polymer containing a methyl acrylate polymer and/or a methyl methacrylate polymer. The methyl acrylate polymer is preferably a homopolymer of methyl acrylate, and the methyl methacrylate polymer is preferably a homopolymer of methyl methacrylate.

The weight average molecular weight Mw of the polyalkyl (meth)acrylate (D) is 10,000 or more and 350,000 or less. The lower limit value is preferably 20,000 or more, 30,000 or more, 40,000 or more, 50,000 or more, 60,000 or more, or 80,000 or more from the viewpoint of enhancing peel strength, and more specifically, cohesive failure resistance, and the upper limit value is preferably 300,000 or less, 250,000 or less, or 200,000 or less from the viewpoint of solubility.

With the weight average molecular weight Mw being 10,000 or more, a dispersed phase in which the polyalkyl (meth)acrylate (D) is dispersed is easily formed when the anaerobic adhesive composition is cured, which is preferable because of excellent peel strength, and more specifically, excellent cohesive failure resistance. In addition, with the weight average molecular weight Mw being 350,000 or less, the polyalkyl (meth)acrylate (D) is easily dissolved in the polymerizable (meth)acrylic monomer (A), which is preferable because the anaerobic adhesive composition of the present invention can be obtained efficiently.

The weight average molecular weight Mw of the polyalkyl (meth)acrylate (D) may be measured, for example, according to gel permeation chromatography (GPC). In the case where a manufacturer's published value is available, the manufacturer's published value may be used as the weight average molecular weight Mw.

The content of the polyalkyl (meth)acrylate (D) is 0.1 to 30 parts by weight with respect to 100 parts by weight of the polymerizable (meth)acrylic monomer. The lower limit value is preferably 0.1 parts by weight or more, 0.5 parts by weight or more, 1 part by weight or more, 2 parts by weight or more, or 3 parts by weight or more from the viewpoint of enhancing peel strength, and more specifically, cohesive failure resistance. In addition, the upper limit value is preferably 25 parts by weight or less, 20 parts by weight or less, 19 parts by weight or less, or 18 parts by weight or less from the viewpoint of handling.

The polyalkyl (meth)acrylate (D) is dissolved in the polymerizable (meth)acrylic monomer (A), but with the curing of the anaerobic adhesive composition, the polyalkyl (meth)acrylate (D) precipitates to form a dispersed phase in the continuous phase composed of the polymerizable (meth)acrylic monomer (A), thus forming a sea-island structure.

The polyalkyl (meth)acrylate (D) is completely dissolved in the polymerizable (meth)acrylic monomer (A) before curing, but when aggregating and precipitating, the polyalkyl (meth)acrylate (D) forms a dispersed phase in a substantially columnar shape or a substantially disk shape.

Herein, first, the mechanism in the case where the dispersed phase of the polyalkyl (meth)acrylate (D) aggregates into a substantially columnar shape will be described below.

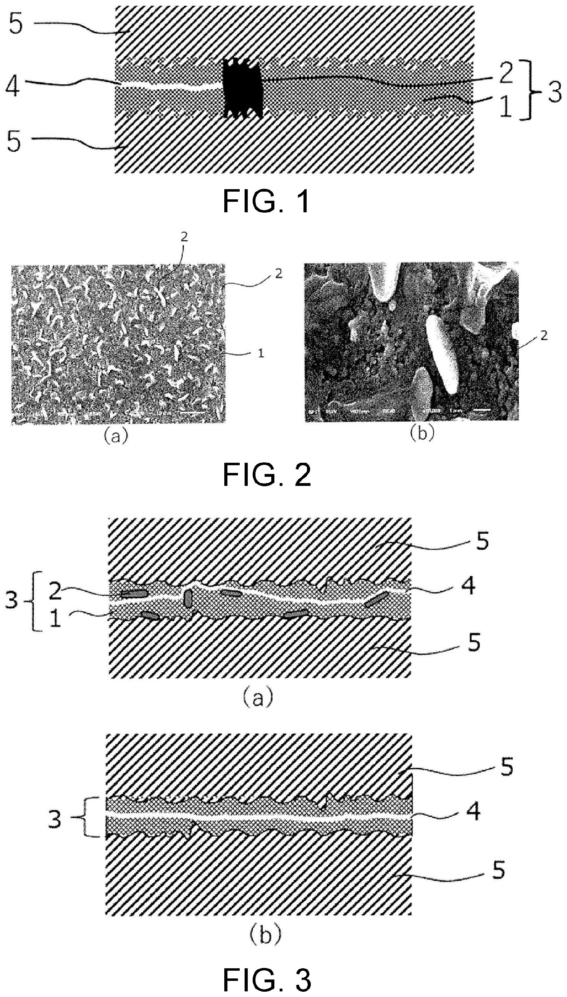

FIG. 1 is a schematic cross-sectional view for describing in detail the mechanism in the case where the dispersed phase composed of the polyalkyl (meth)acrylate (D) aggregates into a substantially columnar shape. As shown in FIG. 1, the polyalkyl (meth)acrylate (D) forms a dispersed phase 2 by precipitating in a substantially columnar shape between two adherends. The polyalkyl (meth)acrylate (D), which is completely dissolved before curing of the anaerobic adhesive composition, precipitates and aggregates in the process of curing of the anaerobic adhesive composition, and when aggregating, may precipitate to penetrate into the irregularities on the surface of an adherend 5. This is thought to achieve an anchor effect and enhance the peel strength. In addition, as shown in FIG. 1, with the polyalkyl (meth)acrylate aggregating into a substantially columnar shape, the progress of cohesive failure is inhibited, and it is thought that the peel strength, and more specifically, the cohesive failure resistance, is excellent.

FIG. 2 is SEM images of a cured product of the anaerobic adhesive composition. FIG. 2(a) is an image taken at 1,500 magnification, and FIG. 2(b) is an image taken at 10,000 magnification. The observation method will be described in Reference Example (to be described later).

According to FIG. 2(a), it is learned that the cured product of the anaerobic adhesive composition forms a sea-island structure in which the polyalkyl (meth)acrylate (D) forms the dispersed phase 2 in a continuous phase 1 composed of the polymerizable (meth)acrylic monomer (A). In addition, as shown in FIG. 2(b), it is learned that the dispersed phase 2 of the polyalkyl (meth)acrylate (D) aggregates into a substantially disk shape. The thickness of the dispersed phase 2 shown in FIG. 2(b) is approximately 0.5 $\mu$m, and the diameter is approximately 8 $\mu$m.

Next, FIG. 3 is schematic cross-sectional views for describing in detail the mechanism in the case where the dispersed phase composed of the polyalkyl (meth)acrylate (D) aggregates into a substantially disk shape. FIG. 3(a) is a schematic cross-sectional view in the case where the cured product of the anaerobic adhesive composition has a substantially disk-shaped dispersed phase composed of the polyalkyl (meth)acrylate (D), and FIG. 3(b) is a schematic cross-sectional view in the case where the cured product of the anaerobic adhesive composition does not have a dispersed phase composed of the polyalkyl (meth)acrylate (D).

Comparing the respective fracture interfaces, in FIG. 3(a) having the dispersed phase 2 composed of the polyalkyl (meth)acrylate (D), the fracture interface is formed along the dispersed phase 2, and it is learned that the fracture interface is more complex than that in FIG. 3(b). In this manner, since the progress of fracture is inhibited by the presence of the dispersed phase 2, FIG. 3(a) having the dispersed phase 2 is thought to be more excellent in peel strength, and more specifically, in cohesive failure resistance, than FIG. 3(b) having no dispersed phase.

Furthermore, in the anaerobic adhesive composition of the present invention, since the polyalkyl (meth)acrylate (D) is completely dissolved before curing, it is thought that, during the curing process of the anaerobic adhesive composition, the polyalkyl (meth)acrylate (D) aggregates into a substantially disk shape as a dispersed phase in the continuous phase composed of the polymerizable (meth)acrylic monomer (A). The polyalkyl (meth)acrylate (D), which is dissolved before curing, may precipitate to penetrate into the irregularities on the surface of the adherend 5 when precipitating and aggregating during the curing process of the anaerobic adhesive composition. This is thought to achieve an anchor effect and enhance the peel strength.

As described above, with the polyalkyl (meth)acrylate (D) in the cured anaerobic adhesive composition aggregating into a substantially columnar shape or a substantially disk shape, the peel strength, and more specifically, the cohesive failure resistance, is excellent. In the cured anaerobic adhesive composition, the aggregate of the polyalkyl (meth)acrylate (D) may precipitate only in a substantially columnar shape, may precipitate only in a substantially disk shape, or may precipitate in both a substantially columnar shape and a substantially disk shape, and the aggregation shape is not particularly limited.

Since the dispersed phase 2 composed of the polyalkyl (meth)acrylate (D) may precipitate to penetrate into the irregularities on the adherend surface, the thickness and diameter of the dispersed phase are not particularly limited, but, for example, the thickness is about 0.1 to 3 $\mu$m, and preferably about 0.5 to 1.5 $\mu$m. In addition, the diameter is, for example, about 1 to 20 $\mu$m, and preferably about 5 to 15 $\mu$m.

In the present specification, "substantially columnar shape" refers to aggregating and precipitating in a substantially columnar shape between two adherends as shown in FIG. 1, but the shape is not strictly defined. In addition, "disk shape" refers to a substantially circular and flat shape as shown in FIG. 2(b), but as long as it is a shape in which the polyalkyl (meth)acrylate aggregates, the shape is not strictly defined. As a method for confirming whether the dispersed phase is the polyalkyl (meth)acrylate (D), for example, measurement may be performed according to Raman spectroscopy, FT-IR mapping method, etc.

Examples of the polyalkyl (meth)acrylate (D) include Dianal (registered trademark) BR-75, BR-82, and BR-85 manufactured by Mitsubishi Chemical Corporation, Hi-pearl (registered trademark) series manufactured by Negami Chemical Industrial Co., Ltd., and TECHPOLYMER (registered trademark) MB series manufactured by Sekisui Kasei Co., Ltd.

[Other Components (P)]

The anaerobic adhesive composition of the embodiment of the present invention may further contain other components in addition to those described above, within a range in which the effects of the present invention can be obtained.

Examples of the other components (P) include a stabilizer, an adhesion improver, a strength improver, a reducing agent, etc., and one or more of these may be contained.

The stabilizer is a component for enhancing storage stability of the anaerobic adhesive composition at room temperature. Examples of the stabilizer include radical polymerization inhibitors and chelating agents, and more specifically include 2,6-di-t-butyl-4-methylphenol, 2,2-methylenebis(4-methyl-6-t-butylphenol), benzoquinone, quinhydrone, tetrasodium ethylenediaminetetraacetate, oxalic acid, N-methyl-N-nitrosoaniline, and N-nitrosodiphenylamine. The content of the stabilizer in the anaerobic adhesive composition may be appropriately determined from the viewpoint of sufficiently enhancing the storage stability, may be, for example, 0.01 to 5 parts by weight with respect to 100 parts by weight of the polymerizable (meth)acrylic monomer (A), and is not particularly limited.

The adhesion improver is a component for improving the adhesion of the anaerobic adhesive composition and stabilizing the adhesive strength. Examples of the adhesion improver include thermoplastic resins such as polyvinyl butyral, acrylonitrile-styrene copolymer (AS resin), acrylonitrile-butadiene-styrene copolymer (ABS resin), and methyl methacrylate-butadiene-styrene copolymer (MBS resin); rubbers such as styrene-butadiene rubber (SBR), polybutadiene rubber (BR), polyisoprene rubber (IR), chloroprene rubber (CR), nitrile rubber (NBR), chlorinated rubber, acrylic rubber, epichlorohydrin rubber, and chlorosulfonated polyethylene; and liquid rubbers such as liquid polybutadiene, terminal acrylic-modified liquid polybutadiene, and liquid acrylonitrile-butadiene copolymer. The content of the adhesion improver in the anaerobic adhesive composition may be appropriately determined within a range in which the effect of improving adhesion can be obtained, may be, for example, 0 to 50 parts by weight, 5 to 40 parts by weight, or 10 to 30 parts by weight with respect to 100 parts by weight of the polymerizable (meth)acrylic monomer (A), and is not particularly limited.

The strength improver is a component for improving the mechanical strength of the cured product of the anaerobic adhesive composition, for example. Examples of the strength improver include a filler. The filler is an organic particle such as a resin particle, or an inorganic particle as described below. Examples of the filler include various powders such as glass, silica, alumina, talc, mica, silicone rubber powder, calcium carbonate, aluminum nitride, carbon powder, kaolin clay, dried clay minerals, and dried diatomaceous earth.

The content of the filler in the anaerobic adhesive composition may be 0.1 to 100 parts by weight or 1 to 10 parts by weight with respect to 100 parts by weight of the polymerizable (meth)acrylic monomer (A), and is not particularly limited.

Among these, silica is preferable from the viewpoint of suppressing occurrence of coating defects due to drying of the anaerobic adhesive composition. The silica may be, for example, hydrophobic silica or hydrophilic silica, but hydrophilic silica is more preferable from the viewpoint of suppressing coating defects due to drying of the anaerobic adhesive composition.

The anaerobic adhesive composition of the embodiment of the present invention may use a primer agent containing a reducing agent in an organic solvent in combination with the anaerobic adhesive composition for the purpose of accelerating curing. Examples of methods for using the primer agent in combination with the anaerobic adhesive composition include a method of coating the primer agent in advance on the site where the anaerobic adhesive composition is to be coated, or a method of coating the primer agent on a site that protrudes from a joining member and is in contact with oxygen.

Examples of the organic solvent include hydrocarbons such as n-pentane, n-hexane, n-heptane, and cyclohexane, halogenated hydrocarbons such as methylene chloride, chloroform, and carbon tetrachloride, methyl alcohol, ethyl alcohol, isopropyl alcohol, ethyl acetate, acetone, methyl methacrylate, and ethyl methacrylate.

The reducing agent is selected from those that form a redox catalyst system with organic peroxides, and examples thereof include thiourea derivatives such as ethylenethiourea, diethylthiourea, tetramethylthiourea, monoacetylthiourea, monobenzoylthiourea, diphenylthiourea, and dicyclohexylthiourea; vanadium compounds such as vanadium acetylacetonate, vanadyl acetylacetonate, vanadyl stearate, vanadium naphthenate, vanadium benzoylacetonate, and vanadium pentoxide; and copper compounds such as copper acetylacetonate, copper chloride, copper acetate, copper naphthenate, and copper neodecanoate. These may be used alone or as a combination of two or more types.

In addition, as the other components (P), further additives such as a viscosity modifier, a colorant, an antibacterial agent, and a moisture curing accelerator may also be contained.

[Production Method and Application]

The anaerobic adhesive composition of the embodiment of the present invention may be prepared by mixing the various components described above. The anaerobic adhesive composition of the embodiment of the present invention may be in a one-liquid form in which all of the various components described above are mixed, or may be in the form of two or more liquids that each partially contain the various components described above and together contain all of the components. The anaerobic adhesive composition of the embodiment of the present invention may be used, for example, as an adhesive for metal adherends, and may be used, for example, as an adhesive for a laminated iron core used in a stator or a rotor of a rotating electric machine.

[Functions and Effects]

The anaerobic adhesive composition of the embodiment of the present invention is coated, for example, on metal adherends, and by assembling the adherends, the anaerobic adhesive composition fills the gap between the adherends, and upon being blocked from air, the anaerobic adhesive composition can be cured in the gap under an anaerobic environment.

Examples of the metal adherends include aluminum plates, copper plates, iron plates, stainless steel plates, titanium plates, aluminum alloy plates, cold rolled steel sheets, and electromagnetic steel sheets, and are not particularly limited.

The present invention is not limited to the embodiments described above, and various modifications are possible within the scope indicated in the claims. Embodiments obtained by appropriately combining technical means disclosed in different embodiments are also included in the technical scope of the present invention.

Examples

Hereinafter, the present invention will be specifically described with reference to Examples, but the present invention is not limited to these Examples in any manner.

[Preparation of Materials]

The following materials were prepared.

• Polymerizable (meth)acrylic monomer (A):

    (a-1) 2-Hydroxyethyl methacrylate [manufactured by Mitsubishi Chemical Corporation, Acryester (registered trademark) HO]

(a-2) Methacrylate [manufactured by Mitsubishi Chemical Corporation, methacrylic acid]

(a-3-1) Ethoxylated bisphenol A di(meth)acrylate [manufactured by Shin-Nakamura Chemical Co., Ltd., NK Ester BPE-200]

(a-3-2) Isobornyl (meth)acrylate [manufactured by Mitsubishi Chemical Corporation, Acryester (registered trademark) IBX]

- Organic peroxide (B):

    (b) Cumene hydroperoxide [manufactured by NOF Corporation, Percumyl (registered trademark) H]

- Curing accelerator (C):

    (c) 1-Acetyl-2-phenylhydrazine [manufactured by Sanuki Chemical Industry Co., Ltd., APH]

- Polymer beads containing polyalkyl (meth)acrylate (D):

    (d-1) Methyl acrylate polymer (manufactured by Mitsubishi Chemical Corporation, Dianal BR-75, weight average molecular weight Mw: 85,000, particle size: approximately 200 to 300 $\mu$m)
    (d-2) Methyl (meth)acrylate polymer [manufactured by Mitsubishi Chemical Corporation, Dianal BR-85, weight average molecular weight Mw: 200,000, particle size: approximately 200 to 300 $\mu$m]
    (d-3) Methyl (meth)acrylate polymer [manufactured by Mitsubishi Chemical Corporation, Dianal BR-82, weight average molecular weight Mw: 150,000, particle size: approximately 200 to 300 $\mu$m]

- Other polymer beads (X) not containing polyalkyl (meth)acrylate (D):

    (x) Styrene polymer [manufactured by Mitsubishi Chemical Corporation, Dianal BR-50, weight average molecular weight Mw: 60,000]

- Other components (P):

    (p-1) Hydrophilic silica [manufactured by Nippon Aerosil Co., Ltd., AEROSIL (registered trademark) 200]
    (p-2) Methyl methacrylate-butadiene-styrene copolymer [manufactured by Kaneka Corporation, Kane Ace (registered trademark) B-56]

Prior to Examples, the sea-island structure obtained by blending the polyalkyl (meth)acrylate (D) was observed (FIG. 2). Specifically, first, a mold frame was prepared by providing a 6 mm × 10 mm opening in a plate with a thickness of 6 mm, and this mold frame was placed on a release film. Next, the anaerobic adhesive composition described in Example 1 of Table 1 blended with a photopolymerization initiator (Omnirad (registered trademark) 184, manufactured by IGM RESINS B.V.) was poured into the mold frame, and then the anaerobic adhesive composition was cured by irradiating with 20,000 mJ ultraviolet light using an ultraviolet irradiation device. Then, the surface of the cured anaerobic adhesive composition was ground with a microtome, and the cross-section was observed with SEM (JSM-6510LA, manufactured by JEOL Ltd.). FIG. 2(a) shows observation at 1,500 magnification, and FIG. 2(b) shows observation at 10,000 magnification.

Materials in the amounts (parts by weight) described in Table 1 were mixed with a mixer to prepare the anaerobic adhesive compositions of Examples 1 to 7 and Comparative Examples 1 to 4.

[Peel Strength]

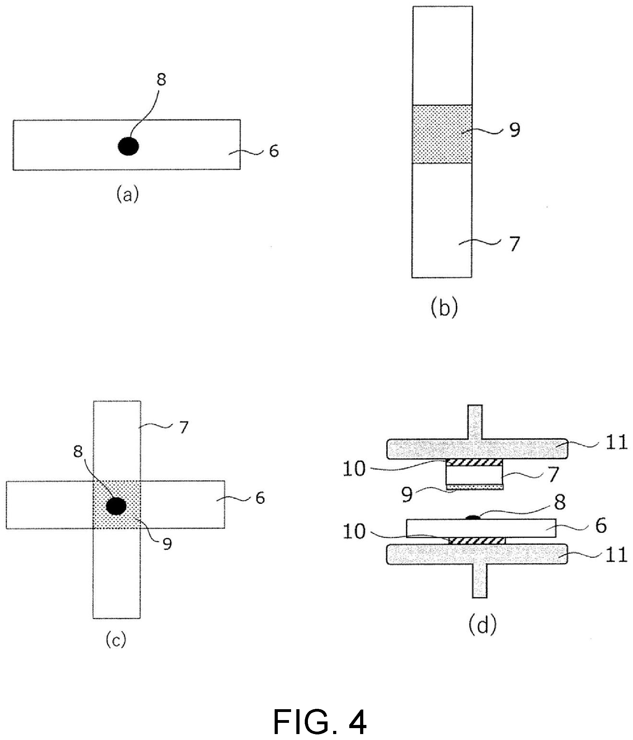

The measurement method for peel strength will be described using FIG. 4.

To a first test piece 6 of cold rolled steel sheet with a width of 25 mm, a length of 100 mm, a thickness of 0.5 mm, and a surface roughness of 1 $\mu$m, 0.8 to 1.2 mg of the prepared anaerobic adhesive composition 8 was coated on a center portion of width 25 mm × length 25 mm (see FIG. 4(a)). In addition, to a second test piece 7 of cold rolled steel sheet with a width of 25 mm, a length of 100 mm, a thickness of 0.5 mm, and a surface roughness of 1 $\mu$m, 2 mg of a primer liquid 9 (8% copper naphthenate manufactured by Toei Chemical Industry Co., Ltd. diluted 25 times with punching oil) was coated on a center portion of width 25 mm × length 25 mm (see FIG. 4(b)).

Next, the first test piece 6 coated with the anaerobic adhesive composition 8 was attached to a jig 11 positioned on the lower side using a double-sided tape 10. In addition, the second test piece 7 coated with the primer liquid 9 was attached to the jig 11 positioned on the upper side using the double-sided tape 10, and at this time, attachment was performed such that the portion of the first test piece 6 coated with the anaerobic adhesive composition 8 and the portion of the second test piece 7 coated with the primer liquid 9 overlapped with each other, with the length directions of the first and second test pieces being orthogonal to each other (see FIG. 4(c) and (d)).

Then, after the first and second test pieces were overlapped and pressurized at 300 N, they were left to stand for 24 hours in an environment of 23°C and 50% RH. Subsequently, using Autograph, peeling was performed at a speed of 3 mm/sec in an environment of 23°C and 50% RH, and the maximum value thereof was measured. The same test was performed three times, and the average value of the three times was taken as the peel strength (N).

The results are shown in Table 1.

[Table 1]

| Component | Polymerizable (meth)acrylic monomer (A) 100 (parts by weight) | | | | Organic peroxide (B) (parts by weight) | Curing accelerator (C) (parts by weight) | Polymer beads containing polyalkyl (meth)acrylate (D) (parts by weight) | | | Other polymer beads (X) (parts by weight) | Other components (P) (parts by weight) | | Peel strength (N) |
|---|---|---|---|---|---|---|---|---|---|---|---|---|---|
| | (a-1) (weight%) | (a-2) (weight%) | (a-3-1) (weight%) | (a-3-2) (weight%) | (b) | (c) | (d-1) | (d-2) | (d-3) | (x) | (p-1) | (p-2) | |
| | 2-Hydroxyethyl methacrylate | Methacrylate | Ethoxylated bisphenol A di(meth)acrylate | Isobornyl (meth)acrylate | Cumene hydroperoxide | 1-Acetyl-2-phenylhydrazine | Methyl acrylate polymer (Mw=85.000) | Methyl methacrylate polymer (Mw=200.000) | Methyl methacrylate polymer (Mw=150.000) | Styrene polymer (Mw=60.000) | Hydrophilic silica | Methyl methacrylate-butadiene-styrene copolymer | |
| Example 1 | 72 | 28 | - | - | 6 | 1 | 4 | - | - | - | 5 | 22 | 60 |
| Example 2 | 72 | 28 | - | - | 6 | 1 | 11 | - | - | - | 5 | 22 | 140 |
| Example 3 | 72 | 28 | - | - | 6 | 1 | 18 | - | - | - | 5 | 22 | 130 |
| Example 4 | 88 | 12 | - | - | 6 | 1 | 11 | - | - | - | 5 | 22 | 50 |
| Example 5 | 55 | 45 | - | - | 6 | 1 | 11 | - | - | - | 5 | 22 | 100 |
| Example 6 | 72 | 28 | - | - | 6 | 1 | - | 11 | - | - | 5 | 22 | 80 |
| Example 7 | 72 | 28 | - | - | 6 | 1 | - | - | 11 | - | 5 | 22 | 40 |
| Comparative Example 1 | 30 | 20 | 30 | 20 | 6 | 1 | 12 | - | - | - | 4 | 21 | 10 |
| Comparative Example 2 | 30 | 20 | 30 | 20 | 6 | 1 | - | - | - | - | 4 | 29 | 20 |
| Comparative Example 3 | 72 | 28 | - | - | 6 | 1 | - | - | - | - | 9 | 18 | 20 |
| Comparative Example 4 | 72 | 28 | - | - | 6 | 1 | - | - | - | 11 | 5 | 22 | 20 |

As is clear from Table 1, it is learned that the anaerobic adhesive compositions of Examples 1 to 7 have a peel strength of 40 N or more, and are more excellent in peel strength, and more specifically, in cohesive failure resistance, than any of the anaerobic adhesive compositions of Comparative Examples 1 to 4.

[Confirmation of Precipitation State of Dispersed Phase 2]

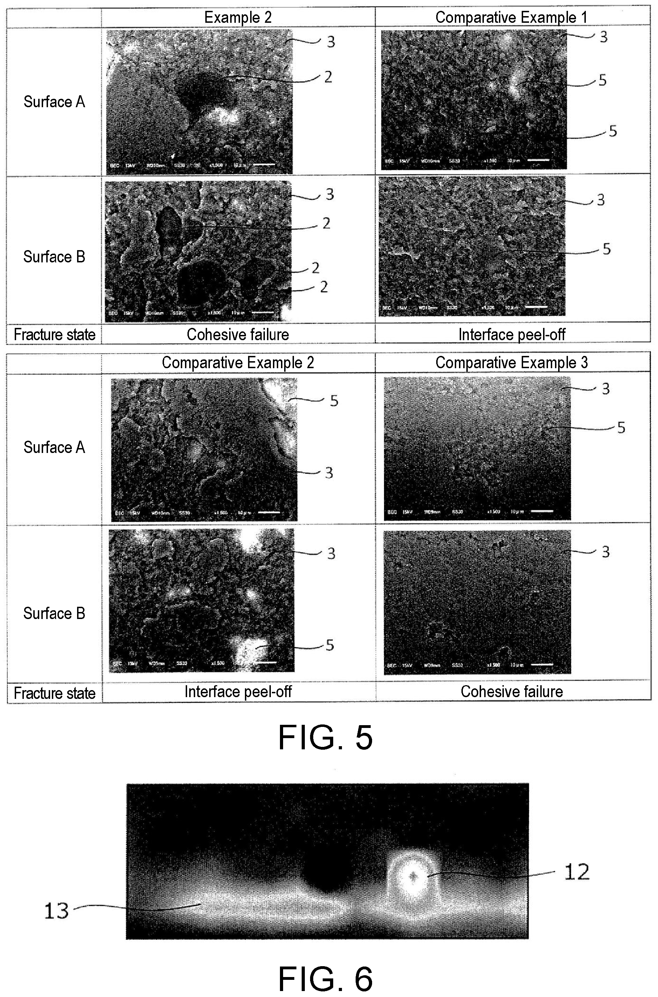

Next, confirmation of the precipitation state of the dispersed phase 2 was performed. Specifically, the peel test described above was performed using the anaerobic adhesive compositions described in Example 2 and Comparative Examples 1 to 3, and the fracture interfaces (surface A and surface B) after peeling were photographed at 1,500 magnification using SEM (JSM-6510LA, manufactured by JEOL Ltd.). FIG. 5 shows SEM images observing the fracture interfaces after the peel test and the fracture states after the peel test.

According to FIG. 5, in Example 2, the dispersed phase 2 having a substantially columnar shape or a substantially disk shape can be recognized, whereas in Comparative Examples 1 to 3, the dispersed phase 2 cannot be recognized. Accordingly, it is learned that the anaerobic adhesive composition of the present invention has the dispersed phase 2 after curing. Furthermore, since the dispersed phase 2 is present on the surface of the fracture interface after the peel test, it is inferred that the cohesive failure progresses along the dispersed phase 2. That is, by using the anaerobic adhesive composition of the present invention, as described in detail in the description of FIG. 3, the progress of cohesive failure is inhibited, and the cohesive failure resistance is thought to be excellent.

In contrast, in Comparative Examples 1 and 2, since the surface of the adherend 5 can be recognized, it is learned that interface peel-off between the surface of the electromagnetic steel sheet and the adhesive layer occurred before cohesive failure of the adhesive layer occurred. Furthermore, in Comparative Example 3, only the cured anaerobic adhesive composition 3 could be recognized, and the dispersed phase 2 present in Example 2 and the surface of the adherend 5 could not be recognized.

[Confirmation of Dispersed Phase 2 According to Raman Spectroscopic Analysis]

Herein, Raman spectroscopic measurement was performed using the anaerobic adhesive composition of Example 2.

First, as preparation for the Raman spectroscopic measurement, the Raman peak of (d-1) methyl acrylate polymer (manufactured by Mitsubishi Chemical Corporation, Dianal BR-75, weight average molecular weight Mw: 85,000) in the anaerobic adhesive composition of Example 2 was measured, and it was confirmed that a characteristic absorption peak was observed at 814 cm$^{-1}$.

Next, a sample for Raman spectroscopic analysis was prepared. First, the anaerobic adhesive composition of Example 2 was coated onto a polycarbonate resin plate to a thickness of 9 $\mu$m, and a release PET was bonded onto the coated anaerobic adhesive composition to prepare a sample.

Then, after confirming that the anaerobic adhesive composition of Example 2 was sufficiently cured, Raman spectrum measurement was performed on the dispersed phase 2 in the cured anaerobic adhesive composition using a Raman spectroscopic apparatus (NRS-4500, manufactured by JASCO Corporation). The measurement results are as described below.

The dispersed phase 2 exhibited an absorption peak at 814 cm$^{-1}$, in the same manner as (d-1) methyl acrylate polymer (manufactured by Mitsubishi Chemical Corporation, Dianal BR-75, weight average molecular weight Mw: 85,000).

In addition, FIG. 6 shows the result of chemical mapping at 814 cm$^{-1}$ of the cross section of the cured anaerobic adhesive composition using a Raman spectroscopic apparatus.

As shown in FIG. 6, two aggregates having a peak at 814 cm$^{-1}$ were observed. One aggregate was aggregated in a substantially disk shape, and the other aggregate was aggregated in a substantially disk shape.

Reference Signs List

1     continuous phase
2     dispersed phase
3     cured anaerobic adhesive composition
4     cohesive failure interface
5     adherend
6     first test piece
7     second test piece

8     anaerobic adhesive composition
9     primer
10    double-sided tape
11    jig
12    aggregate in substantially columnar shape
13    aggregate in substantially disk shape

**Claims**

1. An anaerobic adhesive composition comprising:

    100 parts by weight of a polymerizable (meth)acrylic monomer (A) containing, as main components, (a-1) hydroxyalkyl (meth)acrylate and (a-2) (meth)acrylic acid;
    0.01 to 15 parts by weight of an organic peroxide (B);
    0.01 to 10 parts by weight of a curing accelerator (C); and
    0.1 to 30 parts by weight of a polyalkyl (meth)acrylate (D).

2. The anaerobic adhesive composition according to claim 1, wherein the polymerizable (meth)acrylic monomer (A) contains:

    35 to 90 weight% of the (a-1);
    5 to 60 weight% of the (a-2); and
    0 to 35 weight% of (a-3) (meth)acrylic acid ester other than the (a-1) and the (a-2).

3. The anaerobic adhesive composition according to claim 1, wherein
   the polyalkyl (meth)acrylate (D) is a methyl acrylate polymer and/or a methyl methacrylate polymer.

4. The anaerobic adhesive composition according to claim 1, wherein
   the polyalkyl (meth)acrylate (D) has a weight average molecular weight Mw of 10,000 or more and 350,000 or less.

5. The anaerobic adhesive composition according to any one of claims 1 to 4, wherein
   the polyalkyl (meth)acrylate (D) is soluble in the polymerizable (meth)acrylic monomer (A).

6. The anaerobic adhesive composition according to any one of claims 1 to 4, wherein
   after curing, the anaerobic adhesive composition forms a sea-island structure in which the polyalkyl (meth)acrylate (D) forms a dispersed phase in a continuous phase composed of the polymerizable (meth)acrylic monomer (A).

7. The anaerobic adhesive composition according to claim 6, wherein
   the dispersed phase has a substantially columnar shape or a substantially disk shape.

8. The anaerobic adhesive composition according to any one of claims 1 to 4, which is used for a laminated iron core.

**FIG. 1**

**FIG. 2**

**FIG. 3**

FIG. 4

| | Example 2 | Comparative Example 1 |
|---|---|---|
| Surface A | | |
| Surface B | | |
| Fracture state | Cohesive failure | Interface peel-off |

| | Comparative Example 2 | Comparative Example 3 |
|---|---|---|
| Surface A | | |
| Surface B | | |
| Fracture state | Interface peel-off | Cohesive failure |

FIG. 5

FIG. 6

## INTERNATIONAL SEARCH REPORT

International application No.

**PCT/JP2024/032594**

### A. CLASSIFICATION OF SUBJECT MATTER

*C09J 4/06*(2006.01)i; *C09J 4/02*(2006.01)i; *C09J 11/06*(2006.01)i; *C09J 133/04*(2006.01)i; *H02K 15/02*(2025.01)i
FI: C09J4/06; C09J4/02; C09J11/06; C09J133/04; H02K15/02 F

According to International Patent Classification (IPC) or to both national classification and IPC

### B. FIELDS SEARCHED

Minimum documentation searched (classification system followed by classification symbols)

C09J4/06; C09J4/02; C09J11/06; C09J133/04; H02K15/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2023/017788 A1 (OKURA IND. CO., LTD.) 16 February 2023 (2023-02-16) claims, paragraphs [0009]-[0011], [0015], [0027], examples 1-2 | 1-8 |
| A | US 2023/0272186 A1 (HENKEL AG & CO. KGAA) 31 August 2023 (2023-08-31) claims, table 1B, sample H-N | 1-8 |
| A | WO 2023/100906 A1 (TOAGOSEI CO., LTD.) 08 June 2023 (2023-06-08) claims, paragraphs [0057], [0058], examples 1-5 | 1-8 |
| A | JP 2006-117813 A (THREE BOND CO., LTD.) 11 May 2006 (2006-05-11) claims, paragraphs [0013]-[0015] | 1-8 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **17 October 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2023/017788 | A1 | 16 February 2023 | EP | 4386059 | A1 | |
| | | | | claims, paragraphs [0009]-[0011], [0015], [0026], examples 1-2 | | | |
| | | | | CN | 117795026 | A | |
| US | 2023/0272186 | A1 | 31 August 2023 | EP | 4200344 | A1 | |
| | | | | CN | 116323723 | A | |
| WO | 2023/100906 | A1 | 08 June 2023 | CA | 3239459 | A | |
| | | | | KR | 10-2024-0108540 | A | |
| | | | | CN | 118355085 | A | |
| | | | | TW | 202338046 | A | |
| JP | 2006-117813 | A | 11 May 2006 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 18047209 A